# EUROPEAN PATENT SPECIFICATION

(11) **EP 0 964 491 B1**
(45) Date of publication and mention of the grant of the patent: **09.04.2008**
(21) Application number: 98203027.2
(22) Date of filing: 10.09.1998
(51) Int. Cl.: H02B 1/21

(54) **A structure with a main support and an additional support for the connection of a removable accessorised electrical device**
Struktur mit einer Haupthalterung und einer zusätzlichen Halterung zur Verbindung eines abnehmbaren elektrischen Geräts
Structure comportant un support principal et un support additionnel pour la connexion d'un appareil électrique amovible

(30) Priority: 09.06.1998 IT MI981310
(43) Date of publication of application: 15.12.1999
(73) Proprietor: BTICINO S.P.A., 20154 Milano (IT)
(72) Inventor: Fabrizi, Fabrizio, 24122 Bergamo (IT); Boffelli, Roberto, 24030 Mozzo (Bergamo) (IT)
(74) Representative: Siniscalco, Fabio

(56) References cited:
- EP-A- 0 320 355
- US-A- 2 949 516

## Description

The present invention relates to a structure for the connection of a removable electrical device and, in particular, to a connecting structure according to the preamble to the first claim.

A structure of this sort is disclosed in US A 2 949 516.

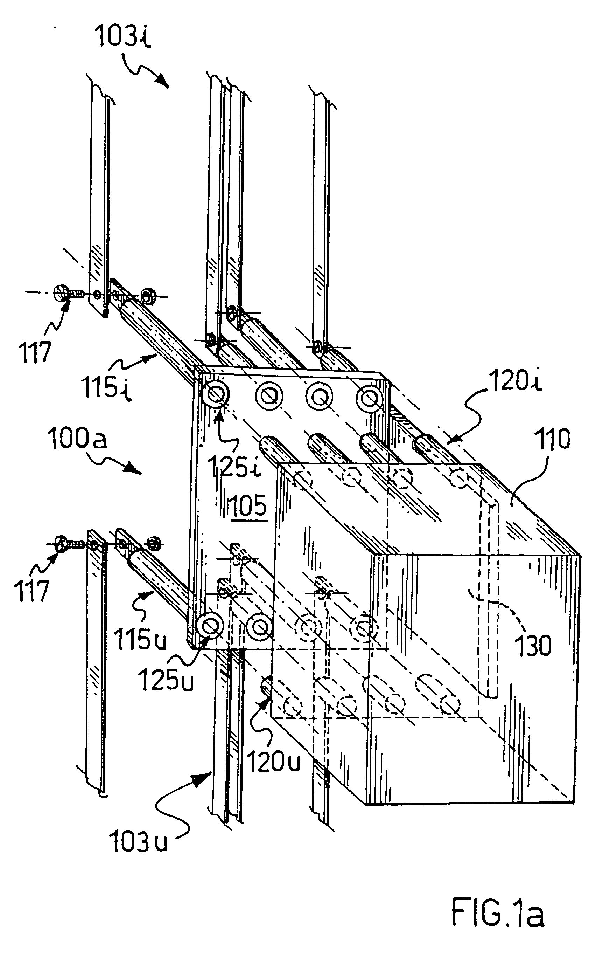

Electrical devices of various types such as, for example, box-type power circuit breakers, are often connected removably between supply and branch lines by means of suitable structures. As shown in Figure 1a, these connection structures typically consist of a main support 100a fixed to a frame which is supplied by electrical power generators on an upper side constituted, for example, by four input lines 103i (three phase lines and one ground line) and is connected to user apparatus (users) on a lower side, constituted by a corresponding number of output lines 103u. The support 100a is formed by an insulating base 105 (made, for example, of plastics material) to a front surface of which a box-type power circuit breaker 110 is fixed (typically by means of screws). Input connectors 115i and output connectors 115u extending perpendicularly from a rear surface of the insulating base 105 are used to connect the main support 100a to the input lines 103i and to the output lines 103u, respectively, by means of suitable bolts 117.

The box-type circuit breaker 110 has electrical input terminals 120i and electrical output terminals 120u; the terminals 120i, 120u have, for example, a "tulip-shaped" structure constituted by a metal cylinder in the vicinity of a free end of which there are longitudinal slots which render the cylinder resiliently deformable. Each input terminal 120i and each output terminal 120u is coupled to an input quick coupling 125i or to an output quick coupling 125u, respectively, provided on the front surface of the insulating base 105. In particular, recesses (for example, circular recesses) are formed in the insulating base 105, a washer and screw being inserted therein and connected electrically to a corresponding connector 115i, 115u. The heads of the screws are covered by insulating caps so as to leave only the washer uncovered; the space between the insulating cap and the side wall of the recess is small enough to prevent the insertion of a finger, thus preventing an operator from accidentally touching the washer (and hence live elements). Each terminal 120i, 120u is pushed onto the insulating cap until a free edge of the slotted cylinder contacts the washer in the base of the recess so as to be electrically connected to a corresponding line 103i, 103u.

This structure enables the box-type circuit breaker 110 to be fixed quickly to the main support 100a, establishing an electrical connection between generators and users without further mechanical connections between the input lines 103i and the output lines 103u. Moreover, the box-type circuit breaker 110 can easily be removed from the main support 100a (even with the input lines 103i live) creating a clearly visible sectioning of the electrical circuit (lines 103i, 103u) for maximum safety of the operators engaged in maintenance work or enlargement of an electrical installation in which the box-type circuit breaker 110 is connected. These removable box-type circuit breakers can be replaced (for example, because of damage or changed characteristics of the electrical installation) without the need to operate on live portions of the installation, with clear advantages from the point of view of speed and safety. The structure described above with the connectors disposed on the rear of the insulating base, also ensures that the live portions of the installation are fully insulated.

Typically, the main support 100a also has a guide 130 for facilitating the fitting and removal of the box-type circuit breaker 110. In a particular configuration (known as an extractable configuration) the main support 100a also includes a support frame (not shown in the drawing) for locking the box-type circuit breaker 110, for example by means of a padlock, in an extracted position in which the terminals 120i, 120u are electrically disconnected from the quick couplings 125i, 125u. These extractable box-type circuit breakers ensure greater safety since they prevent accidental closure of the electrical circuit.

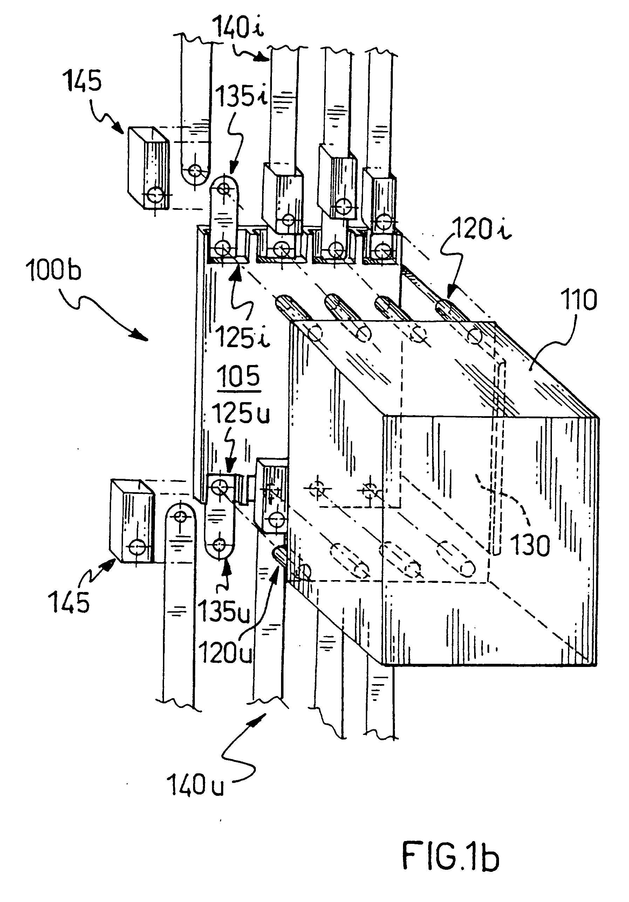

Alternatively, as shown in Figure 1b (elements already shown in Figure 1a are identified by the same reference numerals), a main support 100b with input connectors 135i and output connectors 135u disposed on the front of the insulating base 105 is used. In particular, the recesses (for example, square recesses) in which the quick couplings 125a, 125u are housed are open laterally and the connectors 135i, 135u (fixed by means of the screws of the quick couplings 125i, 125u) project from the insulating base 105, extending outwardly parallel thereto. The input connectors 135i and the output connectors 135u are connected to input lines 140i and output lines 140u, respectively, by means of suitable insulating connecting blocks 145 so as to prevent any accidental contact with live portions of the installation.

A disadvantage of the known structures described above is that they are not very flexible. In particular, when the box-type circuit breaker is equipped with an additional module (such as a differential module) the position of the terminals of the box-type circuit breaker thus accessorised are changed so that it is necessary to use a different main support with the positions of the quick couplings correspondingly changed. This involves a proliferation of bases of different sizes for every possible configuration of the accessorised box-type circuit breaker, resulting in increased production and storage costs; moreover, this solution makes it difficult to install the accessorised box-type circuit breaker because of the need to provide different fixing frames and non-standard electrical connections.

A different known solution consists of the provision, on the accessorised box-type circuit breaker, of conductive transfer strips which bring the terminals, for example, the output terminals, back to the original position corresponding to the quick couplings of the main support. However, if the connections to the fixing frame are disposed on the front of the insulating base (as in the example shown in Figure 1b), the accessorised box-type circuit breaker projects from the main support and is superimposed on the output connectors. It is therefore necessary to space the accessorised box-type circuit breaker from the insulating base in order to be able to house the connecting blocks for the connection of the output connectors to the corresponding lines, making the structure as a whole quite bulky.

The object of the present invention is to overcome the aforementioned drawbacks. To achieve this object, a connection structure as described in the first claim is proposed.

The present invention also proposes an additional support for use in the connection structure and a corresponding method of connection.

Further characteristics and the advantages of the connection structure according to the present invention will become clear from the description of various preferred embodiments thereof given below by way of non-limiting example, with reference to the appended drawings, in which:
Figures 1a and 1b show two known connection supports,
Figures 2a and 2b are two embodiments of the connection structure according to the present invention.

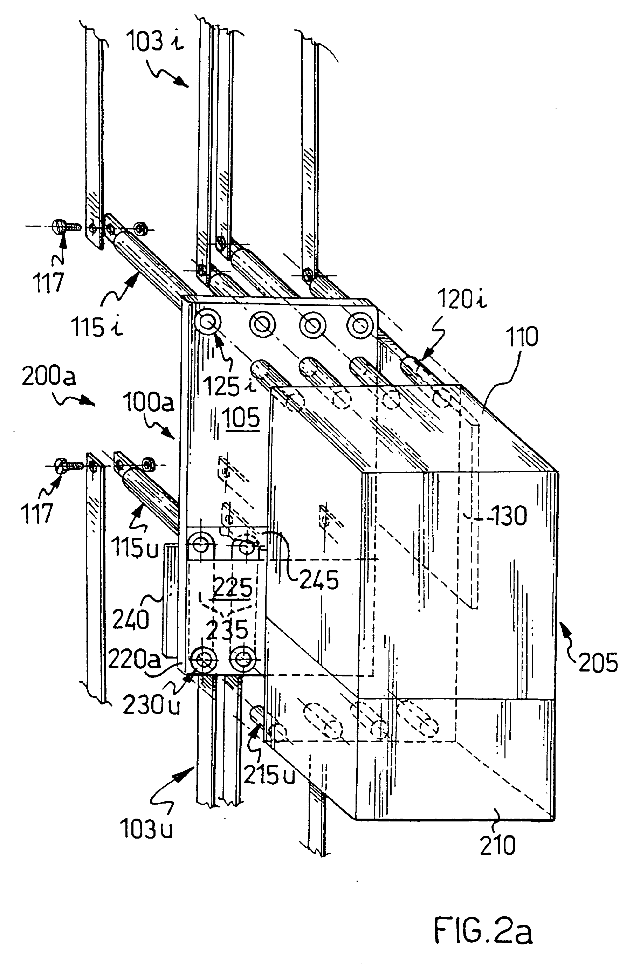

With reference in particular to Figure 2a (Figures 1a-1b have already been described above), in which the elements already shown in Figure 1a are identified by the same reference numerals, this drawing shows a connection structure 200a for a removable, accessorised box-type circuit breaker 205. The accessorised circuit breaker 205 is constituted by the box-type circuit breaker 110 connected in series with a differential module 210; similar remarks apply if the box-type circuit breaker is equipped with a different additional module (for example, a module which can increase the breaking capacity, or the like) if the box-type circuit breaker is of the extractable type and, in general, if any removable electrical device constituted by a main module equipped with an additional module is used.

The input terminals 120i of the box-type circuit breaker 110 (four terminals in the embodiment in question) also constitute the input terminals of the accessorised circuit breaker 205. The output terminals of the box-type circuit breaker 110 on the other hand are connected directly to corresponding input terminals of the differential module 210. The differential module 210 has output terminals 215u (similar to the terminals 120u of Figure 1a) which constitute the output terminals of the accessorised circuit breaker 205; as shown clearly in the drawing, the output terminals 215u are disposed outside the main support 100a. Alternatively, the input and output terminals (and the corresponding quick couplings) have a different structure, the accessorised box-type circuit breaker has a different number of input and output terminals (or even only one), for connection to a corresponding number of lines, etc.

The connection structure 200a includes an additional support 220a fixed (as described below) to the main support 100a. The additional support 220a is also constituted by an insulating base 225 (made, for example, of plastics material) on a front surface of which quick output couplings 230u (similar to the quick couplings 125u of Figure 1a) are provided opposite the output terminals 215u.

The additional support 220a has metal transfer strips 235 (or other equivalent means). The lower free end of each transfer strip 235 has a through-hole for connection to a corresponding quick coupling 230u (by means of the screw and the washer inserted in the through-hole and screwed into a nut). The transfer strip 235 extends all the way through the insulating base 225, projecting from a free edge thereof facing the main support 100a. The transfer strips 235 are preferably disposed on a rear surface of the insulating base 225, for example, in channels separated from one another by dividing walls and closed by an insulating plate 240; the transfer strips 235 are thus completely insulated except for their free ends projecting from the insulating base 225.

The free ends of the transfer strips 235 are supported in the recesses (which are open laterally) used for holding the output quick couplings (indicated 125u in Figure 1a). Each transfer strip is fixed to the main support 100a (by means of the screw of the quick coupling inserted in a through-hole provided in the transfer strip); a protective insulating plate 245 preferably closes the portion of the main support 100a in which this connection is made.

The additional support 220a is thus fixed mechanically (rigidly) to the main support 100a and, at the same time, the transfer strips 235 (and hence also the quick output couplings 230u) are electrically connected to the corresponding output connectors 115u.

The connection structure of the present invention enables the positions of the connections to the fixing frame to remain unchanged when the positions of the terminals of the accessorised box-type circuit breaker are changed. This solution uses a single main support which may be equipped with various different additional supports as required substantially reducing the production and storage costs of the connection structures. Moreover, this reduces the variability of the fixing frames without the need to provide non-standard electrical connections.

The embodiment described above is particularly simple and strong and can be mass-produced at low cost; the present invention may, however, also be implemented by different transfer structures, with separate means for the mechanical and electrical connection of the additional support to the main support, etc.

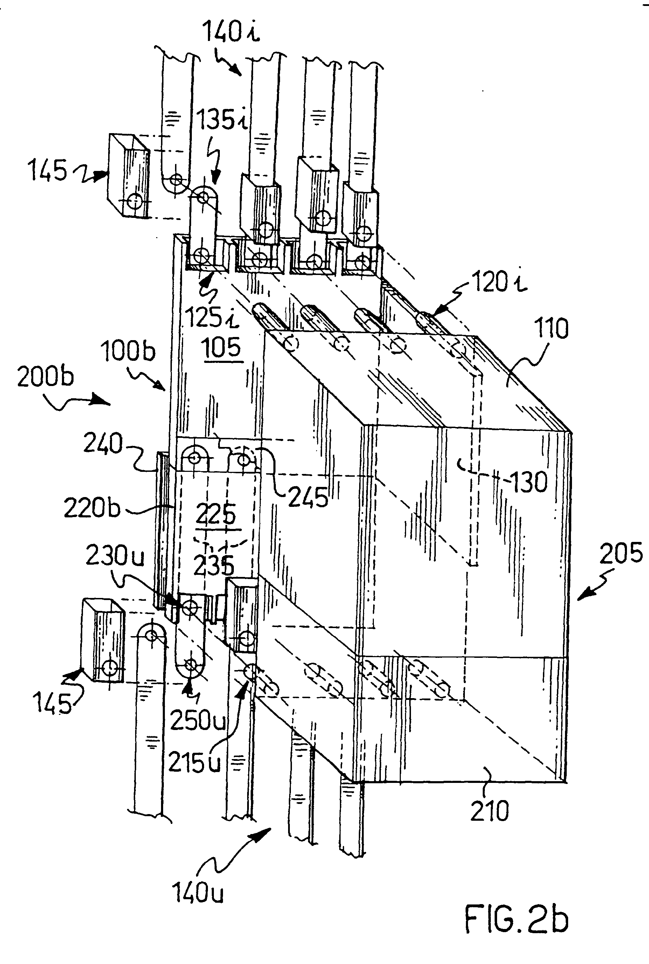

Another embodiment of the connection structure according to the present invention is shown in Figure 2b (elements already shown in Figures 1b and 2a are identified by the same reference numerals). This drawing shows a connection structure 200b in which an additional support 220b is fixed rigidly to the main support 100b by means of transfer strips 235, in the same manner as in the previous embodiment.

The main support 100b is connected to the input lines 140i by means of input connectors 135a disposed on the front of the insulating base 105 and connected to the quick couplings 125i. Similar output connectors 250u (disposed on the front of the insulating base 225 and connected to the quick couplings 230u) are used to connect the additional support 220b to the output lines 140u. The connections between the connectors 135i, 250u and the lines 140i, 140u are formed with the use of connecting blocks 145.

In this embodiment the connectors project in any case from the accessorised box-type circuit breaker so that the connecting blocks do not adversely affect the depth and hence the overall bulkiness of the structure.

These two embodiments of the connection structure are particularly advantageous since they enable the same additional support to be used both when the connectors are disposed at the rear and when the connectors are disposed at the front. The present invention may, however, also be implemented with different structures of the additional support, with other systems for fixing the additional support to the main support, etc.

Naturally, in order to satisfy contingent and specific requirements, an expert in the art may apply to the above-described connection structure many modifications and variations all of which, however, are included within the scope of protection of the invention as defined by the following claims.

## Claims

1. A structure (200a; 200b) for the connection of a removable electrical device (205) constituted by a main module (110) equipped with an additional module (210) between at least one first line (103i; 140i) and at least one second line (103u; 140u), the structure (200a; 200b) comprising a main support (100a; 100b) for holding the main module (110), first connection means (115i; 135i) and second connection means (115u; 250u) for connection to the at least one first line (103i; 140i) and to the at least one second line (103u; 140u), respectively, and first (125i) and second (230u) quick coupling means electrically connected to the first connection means (115i; 135i) and to the second connection means (115u; 250u), respectively, for electrical connection, respectively, to at least one first terminal (120i) and to at least one second terminal (215u) of the electrical device (205) disposed on the main module (110) and on the additional module (210), respectively, the first connection means (115i; 135i) being disposed on the main support (100a; 100b),
**characterized in that**
the first quick coupling means (125i) are disposed on the main support (100a; 100b) it includes an additional support (220a; 220b) fixed removably to the main support (100a; 100b) in order to hold the additional module (210), the second quick coupling means (230u) being disposed on the additional support (220a, 220b).

2. A connection structure (200a) according to Claim 1, in which the main support (100a) and the additional support (220a) include, respectively, a main insulating plate (105) and an additional insulating plate (225) each having a first and a second major surface disposed opposite one another, the main module (110) and the additional module (210) being held on the first surface of the main insulating plate (105) and of the additional insulating plate (225), respectively, and the first (115i) and second (115u) connection means being disposed on the second surface of the main insulating plate (105), the additional support (220a) further comprising transfer means (235) for electrically connecting the second quick coupling means (230u) to the second connection means (115u).

3. A connection structure (200a) according to Claim 2, in which the additional support (220a) is fixed to the main support (100a) by the transfer means (235).

4. A connection structure (200a) according to Claim 3, in which the transfer means include at least one metal strip (235).

5. A connection structure (200a) according to Claim 4, in which the at least one metal strip (235) has a first end connected to the second quick coupling means (230u) and a second end connected to the second connection means (115u), the second end projecting from an edge of the additional insulating plate (225) facing the main insulating plate (105).

6. A connection structure (200b) according to Claim 1, in which the main support (100b) and the additional support (220b) include, respectively, a main insulating plate (105) and an additional insulating plate (225) each having a first and a second major surface disposed opposite one another, the main module (110) and the additional module (210) being held on the first surface of the main insulating plate (105) and of the additional insulating plate (225), respectively, and the fist (135i) and second (250u) connection means being disposed on the first surface of the main insulating plate (105) and of the additional insulating plate (225), respectively.

7. A connection structure (200b) according to Claim 6, further comprising at least one metal strip (235) for fixing the additional support (220b) to the main support (100b), in which the at least one metal strip (235) has a first end connected to the second quick coupling means (230u) and a second end fixed to the main support (100b), the second end projecting from an edge of the additional insulating plate (225) facing the main insulating plate (105).

8. A connection structure (200a; 200b) according to Claim 5 or Claim 7, in which the at least one metal strip (235) is disposed on the second surface of the additional insulating plate (225).

9. A connection structure (200a; 200b) according to Claim 8, further comprising a first (240) and a second (245) insulating plate, a major portion of the at least one metal strip (235) which does not project from the additional insulating plate (225) being enclosed between the additional insulating plate (225) and the first insulating plate (240) and the second end of the at least one metal strip (235) being enclosed between the main insulating plate (105) and the second insulating plate (245).

10. An additional support (220a; 220b) for use in the connection structure (200a, 200b) according to any one of Claims 1 to 9.

11. A method of connecting a removable electrical device (205) constituted by a main module (110) equipped with an additional module (210) between at least one first line (103i; 140i) and at least one second line (103u, 140u), the method being **characterized by** the steps of:
fixing an additional support (220a, 220b) removably to a main support (100a; 100b),
connecting the main support (100a; 100b) and the additional support (220a; 220b) to the at least one first line (103i, 140i) and to the at least one second line (103u, 140u) by means of first connection means (115i; 135i) and second connection means (115u; 250u), respectively, the first connection means (115i, 135i) being disposed on the main support (100a; 100b),
mounting the main module (110) and the additional module (210) on the main support (100a; 100b) and on the additional support (220a; 220b), respectively,
electrically connecting at least one first terminal (120i) of the electrical device (205) disposed on the main module (110) to first quick coupling means (125i) connected electrically to the first connection means (115i; 135i) and electrically connecting at least one second terminal (215u) of the electrical device (205) disposed on the additional module (210) to second quick coupling means (230u) connected electrically to the second connection means (115u; 250u), the first (125i) and second (230u) quick coupling means being disposed on the main support (100a; 100b) and on the additional support (220a, 220b), respectively.

## Patentansprüche

1. Eine Struktur (200a, 200b) für den Anschluss einer entfernbaren elektrischen Vorrichtung (205), die durch ein Hauptmodul (110), das mit einem zusätzlichen Modul (210) ausgerüstet ist, gebildet ist, zwischen zumindest eine erste Leitung (103i; 140i) und zumindest eine zweite Leitung (103u; 140u), wobei die Struktur (200a; 200b) einen Hauptträger (100a: 100b) zum Halten des Hauptmoduls (110), eine erste Verbindungseinrichtung (115i; 135i) und eine zweite Verbindungseinrichtung (115u; 250u) zum Verbinden mit der zumindest einen ersten Leitung (103i; 140i) beziehungsweise mit der zumindest einen zweiten Leitung (103u; 140u) und eine erste (125i) und zweite (230u) Schnellkopplungseinrichtung, die mit der ersten Verbindungseinrichtung (115i; 135i) beziehungsweise mit der zweiten Verbindungseinrichtung (115u; 250u) elektrisch verbunden ist, zur elektrischen verbindung mit zumindest einem ersten Anschluss (120i) beziehungsweise mit zumindest einem zweiten Anschluss (215u) der elektrischen vorrichtung (205), die auf dem Hauptmodul (110) beziehungsweise auf dem zusätzlichen Modul (210) angeordnet ist, aufweist, wobei die erste Verbindungseinrichtung (115i; 135i) auf dem Hauptträger (100a; 100b) angeordnet ist,
**gekennzeichnet dadurch, dass**
die erste Schnellkopplungseinxichtung (125i) auf dem Hauptträger (100a; 100b) angeordnet ist,
sie einen zusätzlichen Träger (220a; 220b) umfasst, der entfernbar an dem Hauptträger (100a; 100b) befestigt ist, um das zusätzliche Modul (210) zu halten, wobei die zweite Schnellkopplungseinrichtung (230u) auf dem zusätzlichen Träger (220a, 220b) angeordnet ist.

2. Eine verbindungsstruktur (200a) gemäß Anspruch 1, bei der der Hauptträger (100a) und der zusätzliche Träger (220a) eine Hauptisolierplatte (105) beziehungsweise eine zusätzliche Isolierplatte (225) umfassen, von denen jede eine erste und eine zweite Hauptoberfläche aufweist, die einander gegenüber angeordnet sind, wobei das Hauptmodul (110) und das zusätzliche Modul (210) auf der ersten Oberfläche der Hauptisolierplatte (105) beziehungsweise der zusätzlichen Isolierplatte (225) gehalten werden und die erste (115i) und zweite (115u) Verbindungseinrichtung auf der zweiten Oberfläche der Hauptisolierplatte (105) angeordnet sind, wobei der zusätzliche Träger (220a) ferner eine übertragungseinrichtung (233) zum elektrischen Verbinden der zweiten Schnellkopplungseinrichtung (230u) mit der zweiten Verbindungseinrichtung (115u) aufweist.

3. Eine verbindungsstruktur (200a) gemäß Anspruch 2, bei der der zusätzliche Träger (220a) durch die Übertragungseinrichtung (235) an dem Hauptträger (100a) befestigt ist.

4. Eine Verbindungsstruktur (200a) gemäß Anspruch 3, bei der die Übertragungseinrichtung zumindest einen Metallstreifen (235) umfasst.

5. Eine Verbindungsstruktur (200a) gemäß Anspruch 4, bei der der zumindest eine Metallstreifen (235) mit einem ersten Ende mit der zweiten Schnellkopplungseinrichtung (230u) verbunden ist und mit einem zweiten Ende mit der zweiten Verbindungseinrichtung (115u) verbunden ist, wobei das zweite Ende von einer Kante der zusätzlichen Isolierplatte (225), die der Hauptisolierplatte (105) zugewandt ist, vorsteht.

6. Eine Verbindungsstruktur (200b) gemäß Anspruch 1, bei der der Hauptträger (100b) und der zusätzliche Träger (220b) eine Hauptisolierplatte (105) beziehungsweise eine zusätzliche Isolierplatte (225) umfassen, von denen jede eine erste und eine zweite Hauptoberfläche aufweist, die einander gegenüber angeordnet sind, wobei das Hauptmodul (110) und das zusätzliche Modul (210) auf der ersten Oberfläche der Hauptisolierplatte (105) beziehungsweise der zusätzlichen Isolierplatte (225) gehalten werden, und die erste (135i) und zweite (250u) Verbindungseinrichtung auf der ersten Oberfläche der hauptisolierplatte (105) beziehungsweise der zusätzlichen Isolierplatte (225) angeordnet sind.

7. Eine Verbindungsstruktur (200b) gemäß Anspruch 6, die ferner zumindest einen Metallstreifen (235) zum Befestigen des zusätzlichen Trägers (220b) an dem Hauptträger (100b) aufweist, wobei der zumindest eine MetallStreifen (235) mit einem ersten Ende mit der zweiten Schnellkopplungseinrichtung (230u) verbunden ist und mit einem zweiten Ende an dem Hauptträger (100b) befestigt ist, wobei das zweite Ende von einer Kante der zusätzlichen Isolierplatte (225), die der Hauptisolierplatte (105) zugewandt ist, vorsteht.

8. Eine Verbindungsstruktur (200a; 200b) gemäß Anspruch 5 oder Anspruch 7, bei der der zumindest eine Metallstreifen (235) auf der zweiten Oberfläche der zusätzlichen Isolierplatte (225) angeordnet ist.

9. Eine Verbindungsstruktur (200a; 200b) gemäß Anspruch 8, die ferner eine erste (240) und eine zweite (245) Isolierplatte aufweist, wobei ein größerer Abschnitt des zumindest einen Metallstreifens (235), der nicht von der zusätzlichen Isolierplatte (225) vorsteht, zwischen der zusätzlichen Isolierplatte (225) und der ersten Isolierplatte (240) eingeschlossen ist, und das zweite Ende des zumindest einen Metallstreifens (235) zwischen der Hauptisolierplatte (105) und der zweiten Isolierplatte (245) eingeschlossen ist.

10. Ein zusätzlicher Träger (220a; 220b) zur Verwendung in der Verbindungsstruktur (200a, 200b) gemäß einem der Ansprüche 1 bis 9.

11. Ein Verfahren zum Anschließen einer entfernbaren elektrischen Vorrichtung (205), die durch ein Hauptmodul (110), das mit einem zusätzlichen Modul (210) ausgerüstet ist, gebildet ist, zwischen zumindest eine erste Leitung (103i; 140i) und zumindest eine zweite Leitung (103u, 140u), wobei das Verfahren durch die folgenden Schritte **gekennzeichnet** ist:
Befestigen eines zusätzlichen Trägers (220a, 220b) in entfernbarer Art und Weise an einem Hauptträger (100a; 100b),
Verbinden des Hauptträgers (100a; 100b) und des zusätzlichen Trägers (220a; 220b) mit der zumindest einen ersten Leitung (103i, 140i) und mit der zumindest einen zweiten Leitung (103u, 140u) mittels einer ersten Verbindungseinrichtung (115i; 135i) beziehungsweise einer zweiten Verbindungseinrichtung (115u; 250u), wobei die erste Verbindungseinrichtung (115i, 135i) auf dem Hauptträger (100a; 100b) angeordnet ist,
Anbringen des Hauptmoduls (110) und des zusätzlichen Moduls (210) an dem Hauptträger (100a; 100b) beziehungsweise an dem zusätzlichen Träger (220a; 220b),
elektrisches Verbinden zumindest eines ersten Anschlusses (120i) der elektrischen Vorrichtung (205), der auf dem Hauptmodul (110) angeordnet ist, mit einer ersten Schnellkopplungseinrichtung (125i), die mit der ersten Verbindungseinrichtung (115i; 135i) elektrisch verbunden ist, und elektrisches Verbinden zumindest eines zweiten Anschlusses (215u) der elektrischen Vorrichtung (205), der auf dem zusätzlichen Modul (210) angeordnet ist, mit einer zweiten Schnellkopplungseinrichtung (230u), die mit der zweiten Verbindungseinrichtung (115u; 250u) elektrisch verbunden ist, wobei die erste (125i) und zweite (230u) Schnellkopplungseinrichtung auf dem Hauptträger (100a; 100b) beziehungsweise auf dem zusätzlichen Träger (220a, 220b) angeordnet sind.

## Revendications

1. Structure (200a ; 200b) pour la connexion d'un dispositif électrique amovible (205) constitué d'un module principal (110) équipé d'un module additionnel (210) entre au moins une première ligne (103i ; 140i) et au moins une seconde ligne (103u ; 140u), la structure (200a ; 200b) comportant un support principal (100a ; 100b) destiné à maintenir le module principal (110), des premiers moyens de connexion (115i ; 135i) et des seconds moyens de connexion (115u ; 250u) pour une connexion à la, au moins une, première ligne (103i ; 140i) et à la, au moins une, seconde ligne (103u ; 140u), respectivement, et des premiers (125i) et seconds (230u) moyens d'accouplement rapide connectés électriquement aux premiers moyens de connexion (115i ; 135i) et aux seconds moyens de connexion (115u ; 250u), respectivement, pour une connexion électrique, respectivement à au moins une première borne (120i) et à au moins une seconde borne (215u) du dispositif électrique (205) disposé sur le module principal (110) et sur le module additionnel (210), respectivement, les premiers moyens de connexion (115i ; 135i) étant disposés sur le support principal (100a ; 100b),
**caractérisée en ce que**
les premiers moyens d'accouplement rapide (125i) sont disposés sur le support principal (100a ; 100b), et **en ce qu'**elle comprend un support additionnel (220a ; 220b) fixé de façon amovible au support principal (100a ; 100b) pour maintenir le module additionnel (210), les seconds moyens d'accouplement rapide (230u) étant disposés sur le support additionnel (220a, 220b).

2. Structure de connexion (200a) selon la revendication 1, dans laquelle le support principal (100a) et le support additionnel (220a) comprennent, respectivement, une plaque isolante principale (105) et une plaque isolante additionnelle (225) ayant chacune des première et seconde surfaces principales disposées de façon à être opposées l'une à l'autre, le module principal (110) et le module additionnel (210) étant maintenus sur la première surface de la plaque isolante principale (105) et de la plaque isolante additionnelle (225), respectivement, et les premiers (115i) et seconds (115u) moyens de connexion étant disposés sur la seconde surface de la plaque isolante principale (105), le support additionnel (220a) comportant en outre des moyens de transfert (235) pour connecter électriquement les seconds moyens d'accouplement rapide (230u) aux seconds moyens de connexion (115u).

3. Structure de connexion (200a) selon la revendication 2, dans laquelle le support additionnel (220a) est fixé au support principal (100a) par les moyens de transfert (235).

4. Structure de connexion (200a) selon la revendication 3, dans laquelle les moyens de transfert comprennent au moins une bande métallique (235).

5. Structure de connexion (200a) selon la revendication 4, dans laquelle la, au moins une, bande métallique (235) a une première extrémité connectée aux seconds moyens d'accouplement rapide (230u) et une seconde extrémité connectée aux seconds moyens de connexion (115u), la seconde extrémité faisant saillie d'un bord de la plaque isolante additionnelle (225) faisant face à la plaque isolante principale (105).

6. Structure de connexion (200b) selon la revendication 1, dans laquelle le support principal (100b) et le support additionnel (220b) comprennent, respectivement, une plaque isolante principale (105) et une plaque isolante additionnelle (225) ayant chacune des première et seconde surfaces principales disposées de façon à être opposées l'une à l'autre, le module principal (110) et le module additionnel (210) étant maintenus sur la première surface de la plaque isolante principale (105) et de la plaque isolante additionnelle (225), respectivement, et les premiers (135i) et seconds (250u) moyens de connexion étant disposés sur la première surface de la plaque isolante principale (105) et de la plaque isolante additionnelle (225), respectivement.

7. Structure de connexion (200b) selon la revendication 6, comportant en outre au moins une bande métallique (235) pour la fixation du support additionnel (220b) au support principal (100b), dans laquelle la, au moins une, bande métallique (235) a une première extrémité connectée au second moyen d'accouplement rapide (230u) et une seconde extrémité fixée au support principal (100b), la seconde extrémité faisant saillie d'un bord de la plaque isolante additionnelle (225) faisant face à la plaque isolante principale (105).

8. Structure de connexion (200a ; 200b) selon la revendication 5 ou la revendication 7, dans laquelle la, au moins une, bande métallique (235) est disposée sur la seconde surface de la plaque isolante additionnelle (225).

9. Structure de connexion (200a ; 200b) selon la revendication 8, comportant en outre des première (240) et seconde (245) plaques isolantes, une partie principale de la, au moins une, bande métallique (235) qui ne fait pas saillie de la plaque isolante additionnelle (225) étant renfermée entre la plaque isolante additionnelle (225) et la première plaque isolante (240) et la seconde extrémité de la, au moins une, bande métallique (235) étant renfermée entre la plaque isolante principale (105) et la seconde plaque isolante (245).

10. Support additionnel (220a ; 220b) destiné à être utilisé dans la structure de connexion (200a ; 200b) selon l'une quelconque des revendications 1 à 9.

11. Procédé de connexion d'un dispositif électrique amovible (205) constitué d'un module principal (110) équipé d'un module additionnel (210) entre au moins une première ligne (103i, 140i) et au moins une seconde ligne (103u ; 140u), le procédé étant **caractérisé par** les étapes qui consistent ;
à fixer un support additionnel (220a, 220b) de façon amovible à un support principal (100a ; 100b),
à connecter le support principal (100a ; 100b) et le support additionnel (220a, 220b) à la, au moins une, première ligne (103i, 140i) et à la, au moins une, seconde ligne (103u, 140u) à l'aide de premiers moyens de connexion (115i ; 135i) et de seconds moyens de connexion (115u ; 250u), respectivement, les premiers moyens de connexion (115i ; 135i) étant disposés sur le support principal (100a ; 100b) ;
à monter le module principal (110) et le module additionnel (210) sur le support principal (100a ; 100b) et sur le support additionnel (220a ; 220b), respectivement,
à connecter électriquement au moins une première borne (120i) du dispositif électrique (205) disposé sur le module principal (110) à des premiers moyens d'accouplement rapide (125i) connectés électriquement aux premiers moyens de connexion (115i ; 135i) et à connecter électriquement au moins une seconde borne (215u) du dispositif électrique (205) disposé sur le module additionnel (210) à des seconds moyens d'accouplement rapide (230u) connectés électriquement aux seconds moyens de connexion (115 ; 250u), les premiers (125i) et seconds (230u) moyens d'accouplement rapide étant disposés sur le support principal (100a ; 100b) et sur le support additionnel (220a, 220b), respectivement.
